# EUROPEAN PATENT APPLICATION

(11) **EP 1 248 218 A1**
(43) Date of publication of application: **09.10.2002**
(21) Application number: 01999906.9
(22) Date of filing: 27.11.2001
(51) Int. Cl.: G06F 17/60

(54) **INFORMATION PROCESSOR**

(30) Priority: 04.12.2000 JP 2000368489
(71) Applicant: Sony Corporation, Tokyo 141-0001 (JP)
(72) Inventor: HIRAYAMA, Tomoshi, c/o SONY CORPORATION, Tokyo 141-0001 (JP)
(74) Representative: Thévenet, Jean-Bruno
(86) International application number: JP0110303
(87) International publication number: WO02046990

(57) **Abstract**

The present invention is associated with an information processing apparatus adapted to electronically quickly realize the provision of coupon services, the totaling of coupon data, and the fee-charging of the provided services. A coupon issuing apparatus 11 issues coupon conditions to a distribution apparatus 13. The distribution apparatus 13 distributes coupon data along with program broadcast signals. A user receives a desired coupon from a user receiving apparatus 14 and stores the received coupon into a memory stick. A store terminal apparatus 16 receives coupon data distributed by all programs and stores the received coupon data into its internal storage section. The user loads the memory stick 15 into the store terminal apparatus 16. The store terminal apparatus 16 displays usable coupons. When the user selects a desired usable coupon, the store terminal apparatus 16 provides a predetermined service and sends coupon totaled data and fee-charge data to a totaling server 17. The totaling server 17 accumulates the received totaled data and sends the accumulated totaled data and the fee-charge data to the coupon issuing apparatus.

## Description

### Technical Field

The present invention relates to an information processing apparatus and, more particularly, to an information processing apparatus for electronically processing the provision of services by means of coupon and the fee-charging for the provided services.

### Background Art

Service coupons (hereafter referred to simply as coupons) are in general use in which consumers present them to get certain services at purchase of products and payment for services for example.

To be more specific, coupons are printed on advertisement pages for example and, when consumers present these coupons printed on advertisement pages at store for example, services unique to coupons (for examples, discount services) are provided.

However, for conventional coupons to be used commonly by a plurality of chain stores for example, it is necessary for a business entity of coupon distribution (a business entity operating chain stores) to inform beforehand each chain store of the types of coupons and the timings of coupon distribution to consumers, thereby presenting a problem of requiring great deal of time.

The conventional couponing also present problems that, when each chain store is presented with coupons from consumers, each chain store must manually check the service contents of the presented coupons and, if couponing is made valid only when a plurality of coupons are presented, check the number of coupons presented and manually check the compilation of the final coupon usage, thereby causing each business entity to spend much time and effort.

Moreover, since each business entity must manually total coupons as described above, it takes time to understand the classes of consumers who presented coupons and therefore it is difficult to promptly reflect on marketing the reaction of consumers to distributed coupons for example.

### Disclosure of Invention

It is therefore an object of the present invention to electronically process the provision of services by means of coupon and the fee-charging for the provided services.

According to the present invention, a first information processing apparatus including storage means for storing an electronic coupon, and distribution means for distributing the electronic coupon stored in the storage means is characterized in that the electronic coupon includes at least two of a valid chain store ID, a valid area ID, a valid product ID, and valid period.

The above-mentioned valid product ID may include a sub ID.

The above-mentioned distribution means may distribute the same electronic coupon to an apparatus of a user who uses the electronic coupon and an apparatus of a provider who provides services based on the electronic coupon.

According to the present invention, a first information processing method including a storage step for storing an electronic coupon, and a distribution step for distributing the electronic coupon stored by the storage step is characterized in that the electronic coupon includes at least two of a valid chain store ID, a valid area ID, a valid product ID, and valid period.

According to the present invention, a first recording medium recorded with a computer-readable program including a storage control step for controlling storage of an electronic coupon, and a distribution control step for controlling distribution of the electronic coupon stored by the storage control step is characterized in that the electronic coupon includes at least two of a valid chain store ID, a valid area ID, a valid product ID, and valid period.

According to the present invention, a second information processing apparatus is characterized in that it includes selection means for selecting a predetermined electronic coupon from a plurality of distributed electronic coupons, reception means for receiving the predetermined electronic coupon selected by the selection means, storage means for storing the electronic coupon received by the reception means, and electronic coupon transmission means for transmitting the electronic coupon stored in the storage means to another information processing apparatus.

The above-mentioned electronic coupon may include at least two of a valid chain store ID, a valid area ID, a valid product ID, and a valid period.

The above-mentioned valid product ID may include a sub ID.

The above-mentioned electronic coupon may be the same as the electronic coupon which is distributed to an apparatus of a provider who provides services based on the electronic coupon.

According to the present invention, a second information processing method is characterized in that it includes a selection step for selecting a predetermined electronic coupon from a plurality of distributed electronic coupons, a reception step for receiving the predetermined electronic coupon selected in the selection step, a storage step for storing the electronic coupon received in the reception step, and an electronic coupon transmission step for transmitting the electronic coupon stored in the storage step to another information processing apparatus.

According to the present invention, a second recording medium recorded with a computer-readable program is characterized in that it includes a selection control step for controlling selection of a predetermined electronic coupon from a plurality of distributed electronic coupons, a reception control step for controlling reception of the predetermined electronic coupon selected in the selection control step, a storage control step for controlling storage of the electronic coupon received in the reception control step, and an electronic coupon transmission control step for controlling transmission of the electronic coupon stored in the storage control step to another information processing apparatus.

According to the present invention, a third information processing apparatus is characterized in that it includes reception means for receiving a plurality of distributed electronic coupons, storage means for storing the plurality of electronic coupons received by the reception means, acceptance means for accepting an electronic coupon from another information processing apparatus which received the electronic coupon, retrieval means for retrieving the electronic coupon accepted by the acceptance means from the plurality of electronic coupons stored in the storage means, and service provision means for providing services corresponding to the electronic coupon accepted by the acceptance means in response to a result of the retrieval made by the retrieval means.

The above-mentioned electronic coupon may include at least two of an valid chain store ID, a valid area ID, a valid product ID, and a valid period.

The third information processing apparatus may further include registration means for registering a plurality of the valid chain store IDs wherein the storage means stores the electronic coupon corresponding to the valid chain store ID registered by the registration means.

The third information processing apparatus may further include if the retrieval means fails to retrieve the electronic coupon corresponding to the electronic coupon accepted by the acceptance means, notification means for notifying a provider of services based on the electronic coupon of the failure of retrieval.

The above-mentioned valid product ID may include a sub ID.

The third information processing apparatus may further include valid period confirmation means for confirming if the electronic coupon is usable on the basis of the valid period.

The third information processing apparatus may further include valid area confirmation means for confirming if the electronic coupon is usable on the basis of the valid area ID.

The above-mentioned electronic coupon may be the same as the electronic coupon to be distributed to another processing apparatus.

The third information processing apparatus may further include recording means for recording a log of the electronic coupon accepted by the acceptance means, and transmission means for transmitting the log recorded in the recording means to a totaling apparatus.

The third information processing apparatus may further include fee-charge data transmission means for transmitting fee-charge data for services provided on the basis of the electronic coupon to the totaling apparatus.

According to the present invention, a third information processing method is characterized in that it includes a reception step for receiving a plurality of distributed electronic coupons, a storage step for storing the plurality of electronic coupons received in the reception step, an acceptance step for accepting an electronic coupon from another information processing apparatus which received the electronic coupon, a retrieval step for retrieving the electronic coupon accepted in the acceptance step from the plurality of electronic coupons stored in the storage step, and a service provision step for providing services corresponding to the electronic coupon accepted in the acceptance step in response to a result of the retrieval made in the retrieval step.

According to the present invention, a third recording medium recorded with a computer-readable program is characterized in that it includes a reception control step for controlling reception of a plurality of distributed electronic coupons, a storage control step for controlling storage of the plurality of electronic coupons received in the reception control step, an acceptance control step for controlling acceptance of an electronic coupon from another information processing apparatus which received the electronic coupon, a retrieval control step for controlling retrieval of the electronic coupon accepted in the acceptance control step from the plurality of electronic coupons stored in the storage control step, and a service provision control step for controlling provision of services corresponding to the electronic coupon accepted in the acceptance control step in response to a result of the retrieval made in the retrieval control step.

According to the present invention, an information processing system is characterized in that it includes a first information processing apparatus having first storage means for storing the electronic coupon, and distribution means for distributing the electronic coupon stored in the first storage means; a second information processing apparatus having selection means for selecting a predetermined electronic coupon from a plurality of distributed electronic coupons, first reception means for receiving the predetermined electronic coupon selected by the selection means, second storage means for storing the electronic coupon received by the first reception means, and electronic coupon transmission means for transmitting the electronic coupon stored in the second storage means to the third information processing apparatus; and a third information processing apparatus having second reception means for receiving a plurality of distributed electronic coupons, third storage means for storing the plurality of electronic coupons received by the second reception means, acceptance means for accepting an electronic coupon from the coupon transmission means, retrieval means for retrieving the electronic coupon accepted by the acceptance means from the plurality of electronic coupons stored in the third storage means, and service provision means for providing services corresponding to the electronic coupon accepted by the acceptance means in response to a result of the retrieval made by the retrieval means.

According to the present invention, an information processing method for an information processing system is characterized in that it includes the information processing method for a first information processing apparatus having a first storage step for storing the electronic coupon, and a distribution step for distributing the electronic coupon stored in the first storage step; the information processing method for a second information processing apparatus having a selection step for selecting a predetermined electronic coupon from a plurality of distributed electronic coupons, a first reception step for receiving the predetermined electronic coupon selected in the selection step, a second storage step for storing the electronic coupon received in the first reception step, and an electronic coupon transmission step for transmitting the electronic coupon stored in the second storage step to the third information processing apparatus; and the information processing method for a third information processing apparatus having a second reception step for receiving all of a plurality of distributed electronic coupons, a third storage step for storing the plurality of electronic coupons received in the second reception step, an acceptance step for accepting an electronic coupon from the coupon transmission step, a retrieval step for retrieving the electronic coupon accepted in the acceptance step from the plurality of electronic coupons stored in the third storage step, and a service provision step for providing services corresponding to the electronic coupon accepted in the acceptance step in response to a result of the retrieval made in the retrieval step.

According to the present invention, a recording medium recorded with a computer-readable program for controlling an information processing system is characterized in that it includes the program stored in the recording medium of a first information processing apparatus having a first storage control step for controlling storage of the electronic coupon, and a distribution control step for controlling distribution of the electronic coupon stored in the first storage control step; the program stored in the recording medium of a second information processing apparatus having a selection control step for controlling selection of a predetermined electronic coupon from a plurality of distributed electronic coupons, a first reception control step for controlling reception of the predetermined electronic coupon selected in the selection control step, a second storage control step for controlling storage of the electronic coupon received in the first reception control step, and an electronic coupon transmission control step for controlling transmission of the electronic coupon stored in the second storage control step to the third information processing apparatus; and the program stored in the recording medium for a third information processing apparatus having a second reception control step for controlling reception of a plurality of distributed electronic coupons, a third storage control step for controlling storage of the plurality of electronic coupons received in the second reception control step, an acceptance control step for controlling acceptance of an electronic coupon from the coupon transmission control step, a retrieval step for controlling retrieval of the electronic coupon accepted in the acceptance control step from the plurality of electronic coupons stored in the third storage control step, and a service provision step for controlling provision of services corresponding to the electronic coupon accepted in the acceptance control step in response to a result of the retrieval made in the retrieval control step.

In the first information processing apparatus and method and recording medium recording a program according to the invention, electronic coupons are stored and the stored electronic coupons are distributed.

In the second information processing apparatus and method and recording medium recording a program according to the invention, a predetermined electronic coupon is selected from a plurality of distributed electronic coupons, the selected predetermined electronic coupon is received, the received coupon is stored, and the stored electronic coupon is transmitted to another information processing apparatus.

In the third information processing apparatus and method and recording medium storing a program according to the invention, a plurality of distributed electronic coupons are received, the received plurality of electronic coupons are stored, an electronic coupon is accepted from another information processing apparatus which received the electronic coupon, the accepted electronic coupon is retrieved from the plurality of stored electronic coupons, and in accordance with a result of the retrieval, a service corresponding to the accepted electronic coupon is provided.

In the information processing system and method and recording medium, an electronic coupon is stored by the first information processing apparatus, the stored coupon is distributed, a predetermined electronic coupon is selected from among a plurality of distributed electronic coupons by the second information processing apparatus, the selected predetermined electronic coupon is received, the received electronic coupon is stored, the stored electronic coupon is transmitted to the third information processing apparatus, all of the plurality of distributed electronic coupons are received by the third information processing apparatus, the received plurality of electronic coupons are stored, the transmitted electronic coupon is accepted, the accepted electronic coupon is retrieved from the plurality of stored electronic coupons, and in accordance with a result of the retrieval, a service corresponding to the accepted electronic coupon is provided.

### Brief Description of Drawings

FIG. 1 is a block diagram illustrating a configuration of a coupon system to which the present invention is applied.
FIG. 2 is a block diagram illustrating a configuration of a coupon issuing apparatus shown in FIG. 1.
FIG. 3 is a block diagram illustrating a configuration of a distribution system shown in FIG. 1.
FIG. 4 is a block diagram illustrating a configuration of a user receiving apparatus shown in FIG. 1.
FIG. 5 is a block diagram illustrating a configuration of a store terminal apparatus shown in FIG. 1.
FIG. 6 is a block diagram illustrating a totaling server shown in FIG. 1.
FIG. 7 is a diagram illustrating a structure of coupon data.
FIG. 8 is a flowchart describing the processing of transmitting coupon conditions.

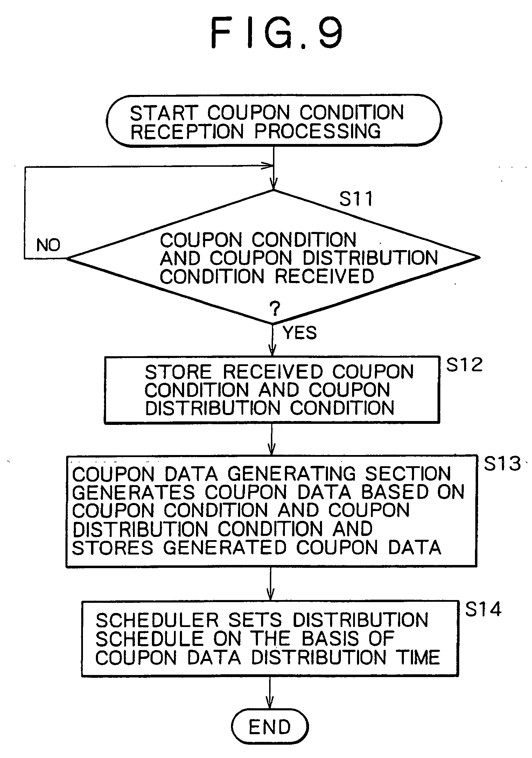

FIG. 9 is a flowchart describing the processing of sending coupon distribution conditions.
FIG. 10 is a flowchart describing the processing of distributing coupons.
FIG. 11 is a flowchart describing the processing by the user receiving apparatus for receiving coupons.
FIG. 12 is a flowchart describing the processing of initializing a store receiving terminal apparatus.
FIG. 13 is a flowchart describing the processing by the store receiving terminal apparatus for receiving coupons.
FIG. 14 is a flowchart describing the processing by the store receiving terminal apparatus for confirming the valid period of coupons.
FIG. 15 is a flowchart describing the processing by the store receiving terminal apparatus for registering the primary valid coupon data of coupons.
FIG. 16 is a flowchart describing the processing by the store receiving terminal apparatus for providing coupon services.
FIG. 17 is a flowchart describing the processing of sending the totaled data of coupon data or the fee-charge data of coupons.
FIG. 18 is a flowchart describing the processing of receiving the totaled data of coupon data or the fee-charge data of coupons.

### Best Mode for Carrying Out the Invention

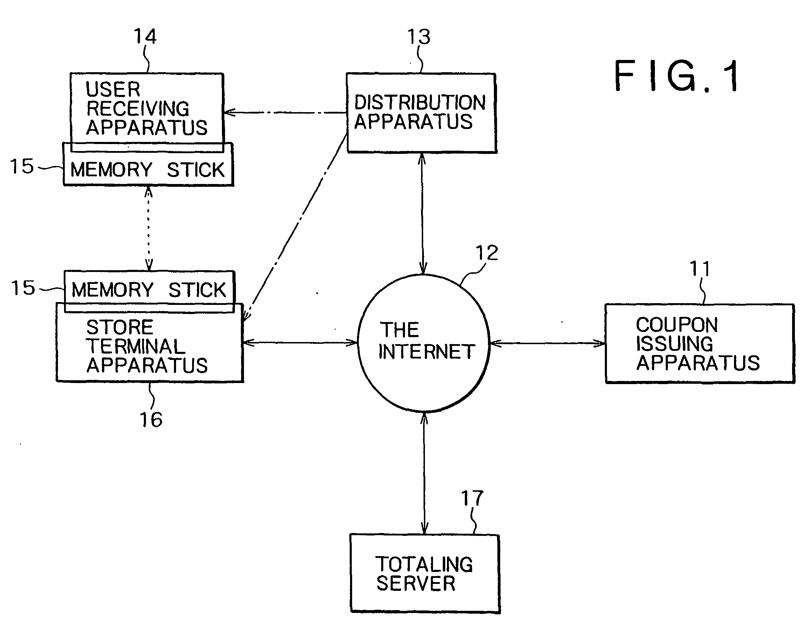

Now, referring to FIG. 1, there is shown a configuration of a coupon system practiced as one embodiment of the present invention.

A coupon issuing apparatus 11 is operated by a business entity which issues electronic coupons (hereafter referred to simply as coupons) and sends coupon conditions entered by the business entity to a distribution apparatus 13 through the Internet 12. At the same time, the coupon issuing apparatus 11 receives coupon usage status and fee-charge information from a totaling server 17 and stores them.

The distribution apparatus 13 is operated by a business entity which broadcasts programs, namely radio program broadcast signals in radio waves in the description below; this business entity may perform any other forms of broadcasting, for example, terrestrial digital radio broadcasting, satellite digital radio broadcasting, CATV (Cable Television), Internet-based distribution, multicast transmission from a predetermined telephone office, multicast transmission from a predetermined mobile phone office, and multimedia transmission from a predetermined pager company. In addition, the distribution apparatus 13 generates coupon data on the basis of the coupon conditions received from the coupon issuing apparatus 11 and multiplexes them with a broadcast signal for distribution in a predetermined timed relation. To be more specific, coupon data are distributed from the distribution apparatus 13 as a bookmark. As described in Japanese Patent Application No. 2000-077627, the bookmark denotes a data stream which is multiplexed with a broadcast signal for distribution at the time of multicast or broadcast distribution by the distribution apparatus 13. For example, when the distribution apparatus 13 broadcasts a radio program, the bookmark is a data stream which is distributed by use of the subband of the radio program.

A user receiving apparatus 14 is owned by each user and, if radio broadcast is distributed as a broadcast signal from the distribution apparatus 13, functions as a portable radio receiver which reproduces radio programs. When the user performs a predetermined operation during the broadcasting of a program, the user receiving apparatus 14 retrieves the coupon data received as a bookmark and stores it in a memory stick 15. The memory stick 15 is a small-sized portable recording medium detachable with the user receiving apparatus 14 and detachable with a store terminal apparatus 16 as well.

The store terminal apparatus 16 is installed at each chain store operated by the business entity which distributes coupons and receives and stores all coupon data distributed from the distribution apparatus 13 as multiplexed with a broadcast signal. Also, the store terminal apparatus 16 loads the memory stick 15 recorded with coupon data, retrieves the coupon data received by the user receiving apparatus 14, and performs the processing such as performing predetermined discount services at the time of fee-charge processing for example. Further, the store terminal apparatus 16 collects the fee-charge information and the personal information of each consumer who used coupons and sends them to the totaling server 17 via the Internet 12.

The totaling server 17 accumulates the fee-charge information and the personal information of each consumer received from the store terminal apparatus 16 via the Internet 12 and sends the fee-charge information and the totaled data to the coupon issuing apparatus 11 via the Internet 12.

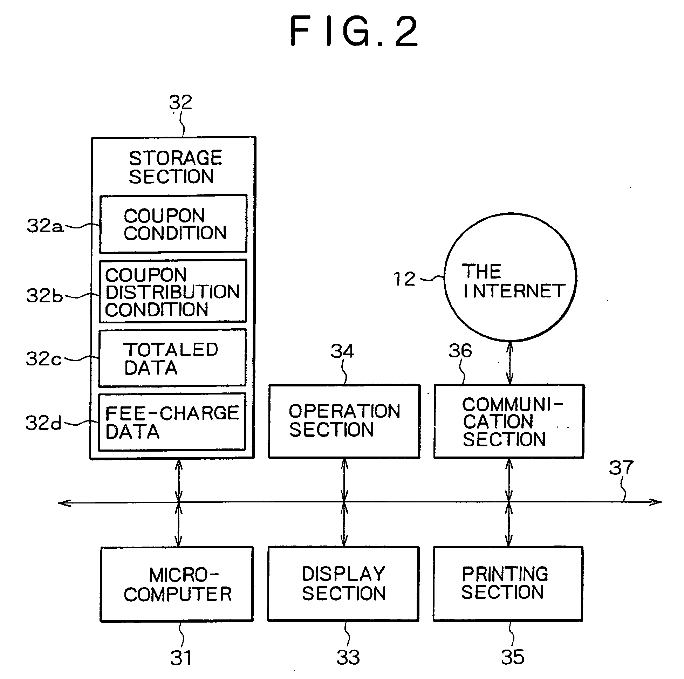

The following describes a configuration of the coupon issuing apparatus 11 with reference to FIG. 2.

A microcomputer 31 includes a CPU (Central Processing Unit), a RAM (Random Access Memory), and a ROM (Read Only Memory) and controls the entire operation of the coupon issuing apparatus 11. A storage section 32 is connected to the microcomputer 31 via a bus 37 and includes recording media such as an HDD (Hard Disc Drive) for example. The storage section 32 stores coupon conditions 32a and coupon distribution conditions 32b entered by the user through an operation section 34 by referencing a display screen shown on a display section 33 constituted by an LCD (Liquid Crystal Display) for example. Further, the storage section 32 stores totaled data 32c and fee-charge data 32d received from the totaling server 17 via a communication section 36.

A printing section 35 is constituted by a so-called printer for example and prints totaled data 32c and fee-charge data 32d as specified by commands issued from the microcomputer 31. The communication section 36 is constituted by a communication device such as a modem and sends the coupon conditions 32a and coupon distribution conditions 32b retrieved from the storage section 32 to the distribution apparatus 13 via the Internet 12 as specified by commands of the microcomputer 31.

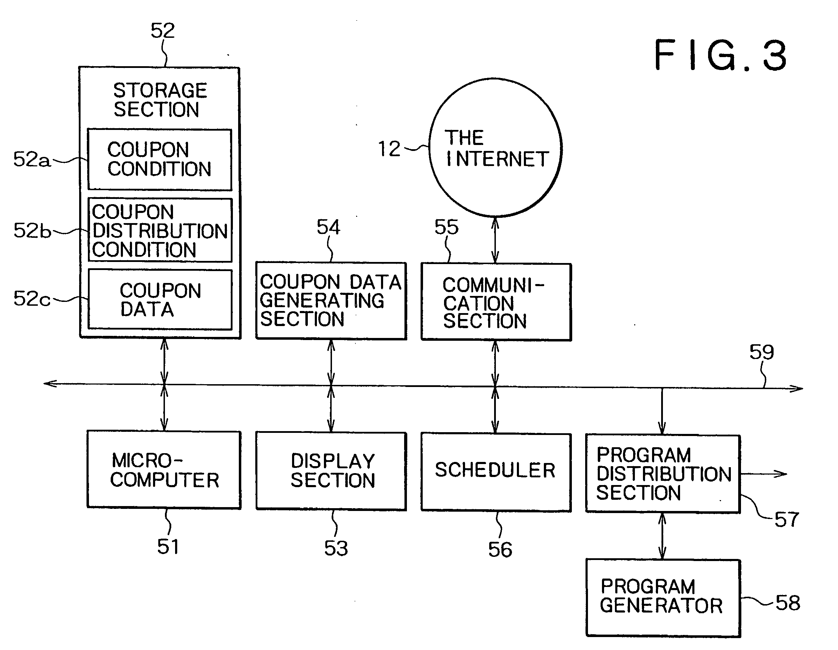

The following describes a configuration of the distribution apparatus 13 with reference to FIG. 3.

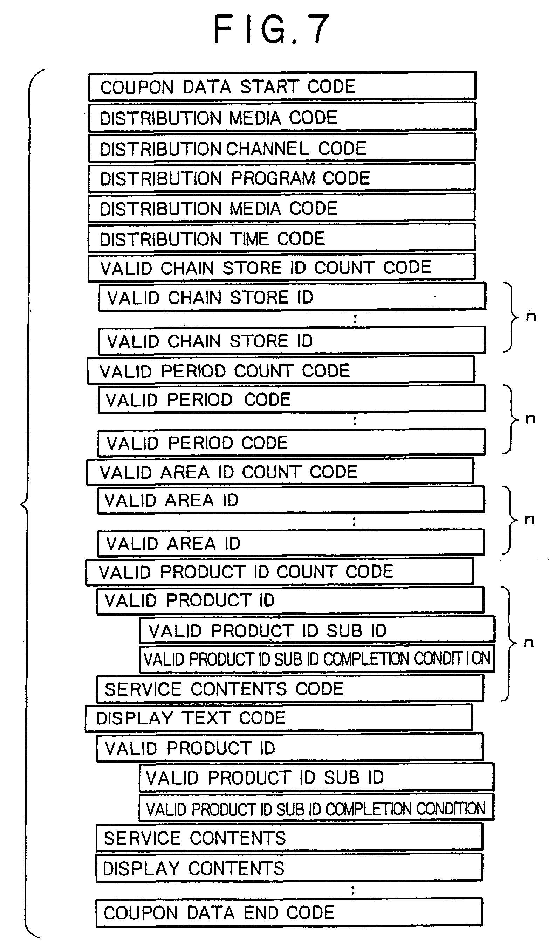

A microcomputer 51 includes a CPU, a RAM, and a ROM and controls the entire operation of the distribution apparatus 13. A storage section 52 is a storage device such as an HDD for example connected to the microcomputer 51 via a bus 59. The storage section 52 stores coupon conditions 52a (the same as the coupon conditions 32a) and coupon distribution condition 52b (the same as the coupon distribution condition 32b) received from the coupon issuing apparatus 11 via a communication section 55 as specified by commands from the microcomputer 51. Also, the storage section 32 stores coupon data generated by a coupon data generating section 54 on the basis of the coupon conditions 52a and coupon distribution conditions 52b. It should be noted that coupon data will be described later with reference to FIG. 7. A display section 53 is constituted by an LCD for example and controlled by the microcomputer 51 to display various data.

A scheduler 56 controls distribution timings on the basis of distribution timing information included in coupon distribution conditions 52b to be described later. A program distribution section 57 is constituted by a multiplexer and an antenna not shown for example and sends program data generated by a program generator 58 as a broadcast signal. In addition, the program distribution section 57 multiplexes coupon data 52c with a program broadcast signal as a bookmark on the basis of commands from the scheduler 56, broadcasting the resultant broadcast signal.

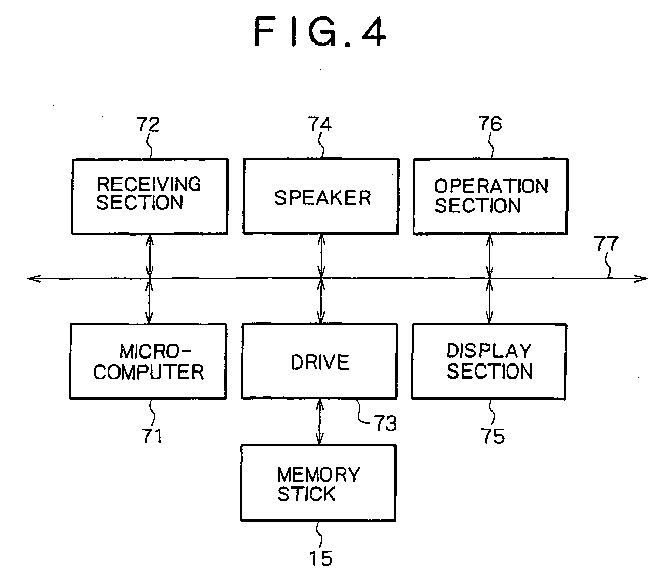

The following describes a configuration of the user receiving apparatus 14 with reference to FIG. 4.

A microcomputer 71 of the user receiving apparatus 14 includes a CPU, a RAM, and a ROM and controls the entire operation of the user receiving apparatus 14. A receiving section 72 includes an antenna, a tuner, a demodulator, and a demultiplexer not shown, reproduces the audio signal of a program of channel selected by the user among the broadcast signals received from the distribution apparatus 13 by operating an operation section 76 in accordance with the information displayed on a display section 75 constituted by an LCD for example, and outputs the reproduced audio signal from a speaker 74.

When the user specifies the reception of coupon data by operating a trigger button for example of the operation section 76 in a predetermined timed relation with a predetermined channel selected, the receiving section 72 extracts a coupon code from the bookmark received as multiplexed with the broadcast signal of the program of the currently received channel and stores the extracted coupon code into the memory stick 15 loaded in a drive 73.

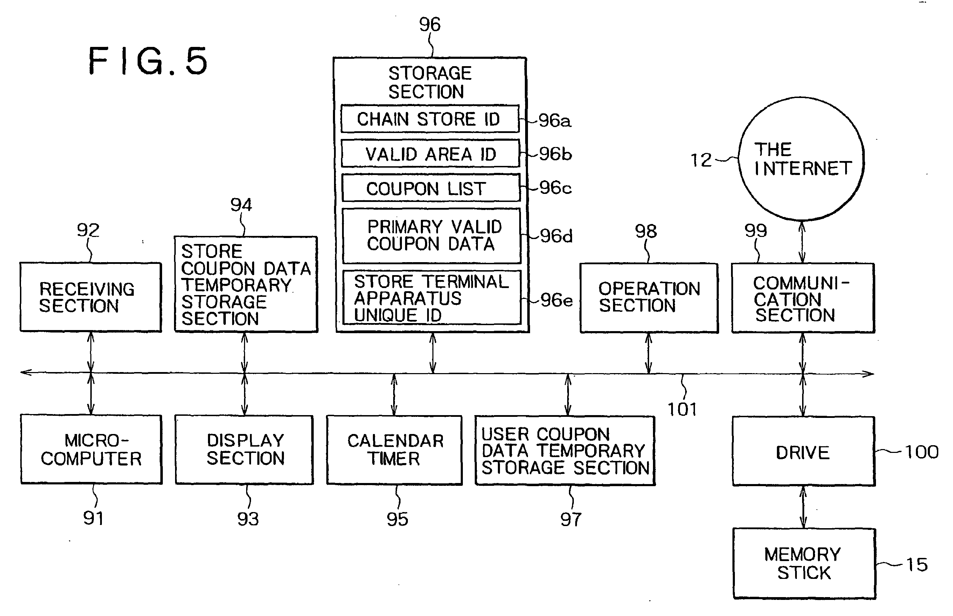

The following describes a configuration of the store terminal apparatus 16 with reference to FIG. 5.

A microcomputer 91 includes a CPU, a RAM, and a ROM and controls the entire operation of the store terminal apparatus 16. A receiving section 92 includes an antenna, a tuner, a demodulator, and a demultiplexer not shown, extracts a coupon code from the bookmark multiplexed with the broadcast signal of all channels received from the distribution apparatus 13, and stores the extracted coupon code into a store coupon data temporary storage section 94. A display section 93 is constituted by an LCD for example and displays a list of currently available coupon data on the basis of commands from the microcomputer 91. A calendar timer 95 counts current date and time, makes confirmation of coupon data valid period, generates data which is used as attached to the totaled data of the coupon data used by the user.

A storage section 96 is constituted by an HDD for example, stores chain store ID 96a and valid area ID 96b entered by the user through an operation section 98, and stores a coupon list 96c storing the coupon data available at a particular store and, of the coupon data registered in the coupon list 96c, primary valid coupon data 96d which are the same in valid product ID of the coupon data stored in a user coupon data temporary storage section 97 and record only the coupon data within the valid period. The primary valid coupon data 96d are retrieved from the memory stick 15 which is loaded in a drive 100. In addition, the storage section 96 stores store terminal apparatus unique ID 96e for identifying each store terminal apparatus 16. A communication section 99 sends the totaled data and fee-charge data for the coupon data used by the user to the totaling server 17 via the Internet 12.

The user coupon data temporary storage section 97 temporarily stores the coupon data retrieved from the memory stick 15 loaded in the drive 100. The operation section 98 is constituted by a mouse and a keyboard for example and operated by the user when selecting desired coupon data from the available coupon data displayed on the display section 93.

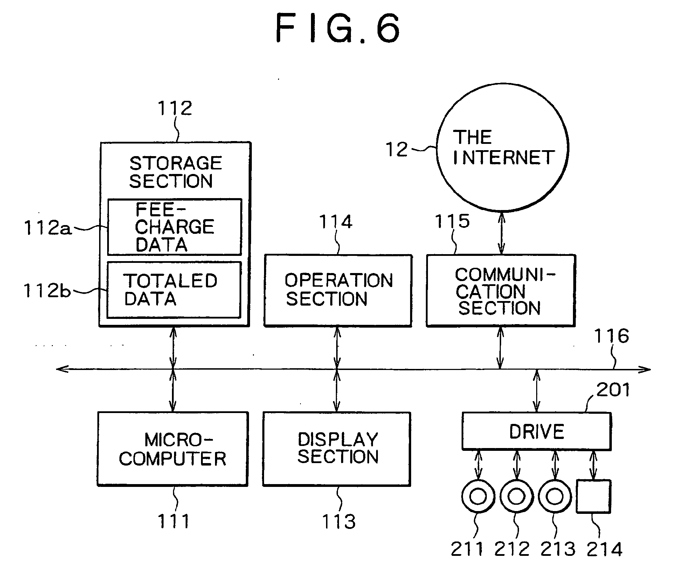

The following describes a configuration of the totaling server 17 with reference to FIG. 6.

A microcomputer 91 includes a CPU, a RAM, and a ROM and controls the entire operation of the totaling server 17. The microcomputer 111 appropriately retrieves programs and data from a magnetic disc 211, an optical disc 212, a magneto-optical disc 213, and a semiconductor memory 214 connected to a drive 201 and executes the retrieved programs and data. It should be noted that the semiconductor memory 214 includes the memory stick 15.

A storage section 112 stores fee-charge data 112a which is generated when coupons are used and totaled data 112b for accumulating the personal data of each user, which are received from the store terminal apparatus 16 via the Internet 12 and a communication section 115. A display section 113 displays the information entered by the user through an operation section 114 composed of a keyboard and a mouse and the fee-charge data 112a and totaled data 112b stored in the storage section 112.

The following describes the coupon conditions to be generated by the coupon issuing apparatus 11. The coupon conditions specify coupons and include chain store IDs of chain stores at which coupons can be used, coupon valid periods, coupon valid area IDs, coupon valid product IDs, sub IDs associated with coupon valid IDs, sub ID condition specification information (for example, conditions which are satisfied when a plurality of coupons are collected), service contents, and text data to be displayed on the display section 93.

A chain store ID identifies each chain store. If coupon services are offered to two or more different chain stores by the same coupon, two or more different chain store IDs must be specified. For example, if both convenience store company I in Kanto area and convenience store company J in Kanto area issue 10% discount coupons on products of company S, the chain store IDs for these coupons are of two types of convenience store company I and convenience store company J of Kanto area. An arrangement may be made in which chain store IDs allocated forehand are automatically retrieved by entering chain store names into the coupon issuing apparatus 11. For new chain stores not registered beforehand, new chain store IDs are allocated.

Two or more coupon valid periods may be set. In this case, if the valid periods are from October 5 to October 10 and from October 25 to October 30 for example, two valid periods must be specified. An arrangement may also be made in which, for those coupons not limited in valid period, entering 00 year, 00 month, 00 day for example can put the valid period out of setting state.

A coupon valid area ID identifies an area in which coupons are usable and two or more coupon valid area IDs may be set. If coupon valid areas are two, Hokkaido and Aomori for example, the valid area IDs for Hokkaido and Aomori must be specified. An arrangement may be made in which, when an area name is entered in the coupon issuing apparatus 11, the valid area ID allocated beforehand is automatically retrieved. For a new area not registered beforehand, a new valid area ID may be allocated. If a coupon is to be valid in all areas, the valid area ID may be an ID which indicates that the coupon is valid in all areas.

A coupon valid product ID identifies products subject to couponing and may specify a plurality of products. If there are two or more products subject to couponing, or if both "Ochazukenori" and "Furikake" of company N for example are subject to coupon services, then both valid product ID for "Ochazukenori" and valid product ID "Furikake" must be specified. An arrangement may be made in which, when a product name is entered in the coupon issuing apparatus 11, the valid product ID allocated beforehand is automatically retrieved. For a new product not registered beforehand, a new valid product ID may be allocated.

A sub ID of coupon valid product ID specifies conditions for coupon usage; there may be two or more types of coupons for a single valid product ID and, when the conditions of sub ID condition specification information are satisfied, the provision of services may be received.

Namely, for example, three types of coupons 1, 2, and 3 are set for the above-mentioned "Ochazukenori" and sub IDs 1, 2 and 3 corresponding to these types are set. Each coupon is distributed by the distribution apparatus 13 to be recorded in the memory stick 15 loaded in the user receiving apparatus 14.

Assume that the storage of all the above-mentioned three types of sub IDs 1, 2, and 3 in the memory stick 15 loaded in the user receiving apparatus 14 be the condition for receiving the services, or the sub ID condition specification information, then, if the valid product ID of the coupon recorded in the memory stick 15 is "Ochazukenori" but a combination of the sub IDs of the coupon ID recorded in the memory stick 15 is 1, 1, 2, it indicates that the condition that the three types of sub IDs 1, 2, and 3 are recorded is not satisfied, so that the services by couponing cannot be received. To receive the services, the coupon data having the valid product ID of "Ochazukenori" and three types of sub IDs 1, 2, and 3 must be recorded.

In the above-mentioned example, the sub IDs are combinations of numbers. Alternatively, the specification that a total of sub ID numbers is 100 or higher may be made or characters such as "red," "blue," or "yellow" or text may be specified. Alternatively, a format that two "reds" or two "blues" may be specified. Obviously, no sub ID may be specified; instead, a service may be set in which only one type of coupon exists always for one valid product ID. In this case, no sub ID need be specified.

Service contents are for entering the information associated with the service contents to be provided by couponing. For example, if a coupon offers a product specified by valid product ID at 15% off unconditionally, "unconditional 15% off is offered at purchase of valid product ID" is specified; if 1000 yen is offered at purchase of a product specified by valid product ID, "1000 yen in cash is offered at purchase of valid product ID"; if, at purchase of a product specified by valid product ID, this product is purchased in 10 or more in bulk, one more product is offered free of charge, "for the purchase of 10 or more and up to 19 valid product IDs, one more valid product ID is offered free of charge" is specified; and, if normal interest rate of 5% is decreased to 2% if a coupon is presented at the purchase of a product specified by valid product ID, "normal interest rate of 5% is decreased to 2% at the purchase of a valid product ID" is specified.

It should be noted that the service contents are intended for electronically processing actual services and their description is made in a format which allows electronic retrieval and electronic interpretation for the electronic provision of services. The text data to be displayed on the display section 93 are intended for displaying the above-mentioned various coupon conditions for example on the display section 93 as required.

The following describes coupon distribution conditions. Coupon distribution conditions provide information for specifying the media and time in and at which coupons are distributed; it specifies the types of distribution media (radio broadcasting, television broadcasting, or satellite broadcasting), programs, and channels, and the distribution timing.

The following describes a configuration of coupon data which are generated by the coupon data generating section 54 of the distribution apparatus 13 with reference to FIG. 7.

The coupon data start with a "coupon data start code" which declares that the subsequent sequence of data up to a "coupon data end code" provide one piece of coupon data. Detecting the coupon block start code, the user receiving apparatus 14 can determine that this bookmark is a coupon and selectively record it into the memory stick 15.

A "distribution media code" specifies the media in which that coupon is distributed; for example, a radio station having terrestrial digital radio, a radio station having satellite digital radio, a predetermined CATV (Cable Television), a predetermined server via the Internet, multicast transmission from a predetermined telephone office, multicast transmission from a predetermined mobile phone office, or multimedia communication from a predetermined pager company.

A "distribution channel code" specifies a channel on which coupons are distributed from the distribution apparatus 13. A "distribution program code" specifies, of channels, a program distributing coupons. The program as used herein includes the specification of a spot advertisement frame. A "distribution time code" specifies the time at which coupons are distributed by broadcasting. A "valid chain store ID count code" specifies the number of chain store IDs specified by the coupon issuing apparatus 11. Normally, this code is 1; however, if the distributed coupon is usable both at "convenience store company I" and "convenience store company J" for example, this code is 2.

A "valid chain store ID" specifies a chain store ID. If two or more valid chain store IDs are specified by the above-mentioned "valid chain store ID count code," the chain store ID is recorded repetitively by the number of chain store IDs (n chain store IDs in the figure). A "valid period count code" specifies the number of valid periods specified by the coupon issuing apparatus 11. Normally, this code is 1; however, if the coupon is usable in both "from October 5 to October 10" and "from October 25 to October 30" as described above for example, this code is 2. A "valid period" specifies a period and records information such as "from October 5 to October 10" and "from October 25 to October 30" as described above for example. If two or more periods are specified by the above-mentioned "valid period count code," the "valid period code" is recorded repetitively by the number of periods (n periods in the figure).

A "valid area ID count code" specifies the number of the "valid area IDs" specified by the coupon issuing apparatus 11. Normally, this code is 1; however, if the coupon is usable in both two areas "Hokkaido" and "Aomori" as described above for example, this code is 2. The "valid area ID" specifies a valid area ID. If two or more valid area IDs are specified by the above-mentioned "valid area ID count code," the valid area ID is recorded repetitively by that number (n valid area IDs in the figure).

A "valid product ID count code" specifies the number of valid product IDs specified by the coupon issuing apparatus 11. Normally, the "valid product ID count code" is 1; however, if the coupon is applied to both "Ochazukenori" and "Furikake" for example, this code is 2. A "valid product ID" specifies the valid product IDs corresponding to "Ochazukenori" and "Furikake." If two or more valid product ID is specified by the "valid product ID count code," the "valid product ID" is recorded repetitively by that number (n valid product IDs in the figure). A "valid product ID sub ID" shown in FIG. 3 specifies the sub ID of valid product ID. If two or more products are specified by the "valid product ID count code," the sub ID of the subject product ID is recorded repetitively by that number (n sub IDs in the figure).

A "valid product ID sub ID completion condition" specifies the condition of the sub ID of valid product ID. If two or more valid product IDs are specified by the "valid product ID count code," the condition of the sub ID of subject product is recorded repetitively by that number (n conditions in the figure).

"Service contents" describe the contents of a service to be provided to a product corresponding to a valid product ID. If two or more valid product IDs are specified by the "valid product ID count code," the service contents are recorded repetitively by that number (n valid product IDs in the figure). "Display contents" records a text string for displaying a coupon data having a subject product ID. If two or more valid product IDs are specified by the "valid product ID count," the text string for displaying prepared for the valid product ID is recorded repetitively by that number (n text strings in the figure).

It should be noted that the coupon code may be omitted of certain items as required. For example, if the system is made operate such that all coupons become valid only for one subject product for example, item "valid product ID count code" may be omitted, each of the subsequent "valid product ID," "valid product ID sub ID," "service contents," " and display contents" being recorded by only one. The valid period and the valid area ID may also be omitted.

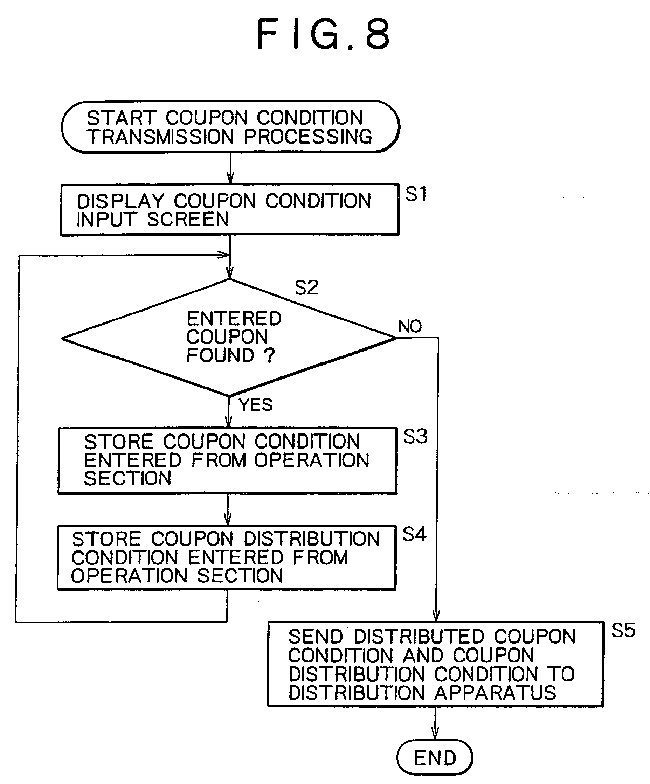

The following describes the coupon condition transmission processing by the coupon issuing apparatus 11 with reference to the flowchart of FIG. 8. In step S1, the microcomputer 11 controls the display section 33 to display a coupon condition input screen.

In step S2, when the user operates the operation section 34 in accordance with the screen shown on the display section 33, the microcomputer 31 determines whether there is any coupon to be entered. If a coupon to be entered is found (if a coupon condition has been entered), the procedure goes to step S3.

In step S3, the microcomputer 31 stores the coupon condition entered from the operation section 34 into the coupon condition 32a of the storage section 32. In step S4, the microcomputer 31 stores the subsequently entered coupon distribution condition into the coupon distribution condition 32b of the storage section 32, upon which the procedure returns to step S2. Namely, if there is any other coupons to be entered, steps S2 through S4 are repeated to enter coupon condition.

If no coupon to be entered is found in step S2, namely, if the information indicating that there is no coupon to be entered by the user through the operation section 34 is entered, then, in step S5, the microcomputer 31 sends the coupon condition 32a and the coupon distribution condition 32b from the storage section 32 to the distribution apparatus 13 via the communication section 36 and the Internet 12.

By the above-mentioned processing, the coupon issuing apparatus 11 sends the coupon condition and coupon distribution condition to the distribution apparatus 13.

The following describes the processing for the distribution apparatus 13 to receive coupon condition from the coupon issuing apparatus 11.

In step S11, the microcomputer 51 controls the communication section 55 to determine whether or not the coupon condition and coupon distribution condition have been supplied. This operation is repeated until the coupon condition and the coupon distribution condition have been supplied. If the coupon condition are found supplied, then the procedure goes to step S12.

In step S12, the microcomputer 51 controls the communication section 55 to receive the supplied coupon condition and coupon distribution condition and stores them into the storage section 52 as coupon condition 52a and coupon distribution condition 52b.

In step S13, the microcomputer 51 controls the coupon data generating section 54 to generate coupon data as shown in FIG. 7 on the basis of the coupon condition 52a and coupon distribution condition stored in the storage section 52 and stores the generated coupon data into the storage section 52 as coupon data 52c.

In step S14, the microcomputer 51 controls the scheduler 56 to set a distribution schedule of the coupon data on the basis of a distribution timing code in the coupon data 52c stored in the storage section 52 and stores the distribution schedule into an incorporated memory.

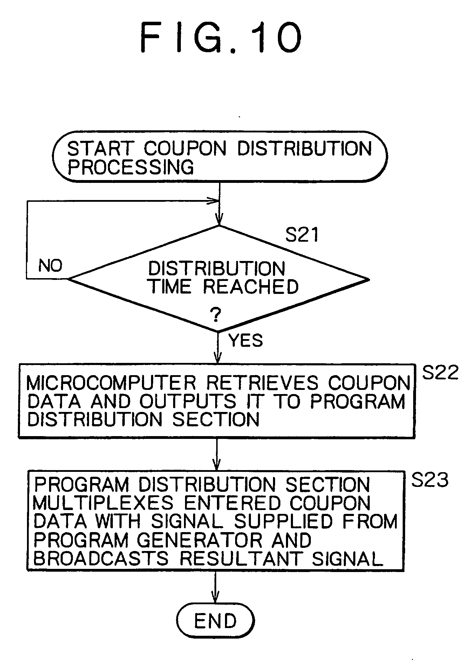

The following describes the coupon distribution processing of the distribution apparatus 13 with reference to the flowchart of FIG. 10. In step S21, the scheduler 56 determines whether or not a registered distribution schedule has been reached and repeats this operation until the distribution timing has been reached. If the distribution time is found reached, the procedure goes to step S22.

In step S22, the microcomputer 51 retrieves the coupon data 52c from the storage section 32 and outputs the data to the program distribution section 57. The program distribution section 57 multiplexes the inputted coupon data 52c with a signal supplied from the program generator 58 and sends the resultant signal from an antenna, not shown, as a broadcast signal.

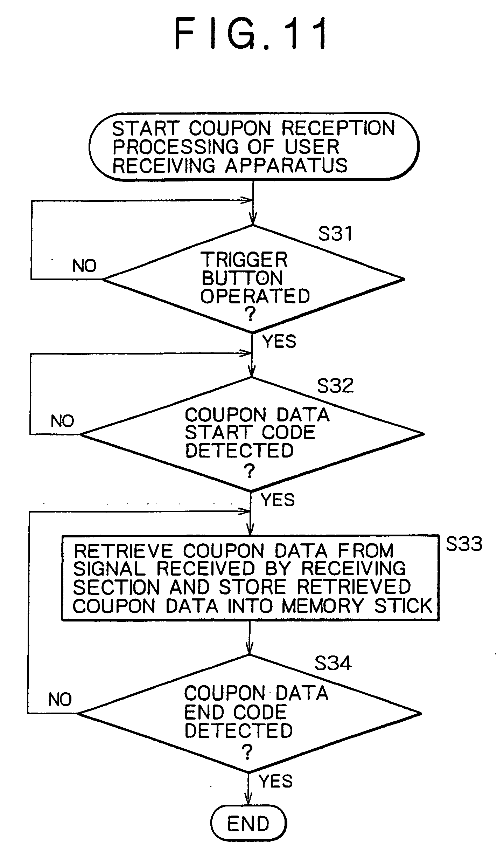

The following describes the processing for the user receiving apparatus 14 to receive the coupon data supplied as multiplexed with a broadcast signal from the distribution apparatus 13 with reference to the flowchart of FIG. 11. At this moment, the user receiving apparatus 14 is receiving a program distributed by the broadcast signal.

In step S31, the microcomputer 51 determines whether or not the trigger button for receiving coupon data has been operated by the user through the operation section 76 and repeats this operation until the trigger button is operated. If the trigger button is found operated, the procedure goes to step S32. Namely, for example, if, during the broadcasting of a program, when a commercial of a certain product is on, a coupon distributed by the maker of that product is to be obtained, the user operates the trigger button.

In step S32, the microcomputer 51 controls the receiving section 72 to determine whether or not the start code of the coupon data multiplexed with the broadcast signal being received has been detected and repeats this operation until the start code is detected. If the start code is found detected, the procedure goes to step S33.

In step S33, the microcomputer 71 controls the receiving section 72 to extracts coupon data from the received bookmark and stores the extracted coupon data into the memory stick 15 loaded in the drive 73. In step S34, the microcomputer 71 determines whether or not the end code of the extracted coupon data from the receiving section 72 has been detected. If the end code of the coupon data is found detected in step S34, the procedure returns to step S33. Namely, the microcomputer 71 continues the processing of storing the coupon data received by the receiving section 72 into the memory stick 15 until the end code of the coupon data is received. If the end code of the coupon data is found detected in step S34, then the procedure comes to an end.

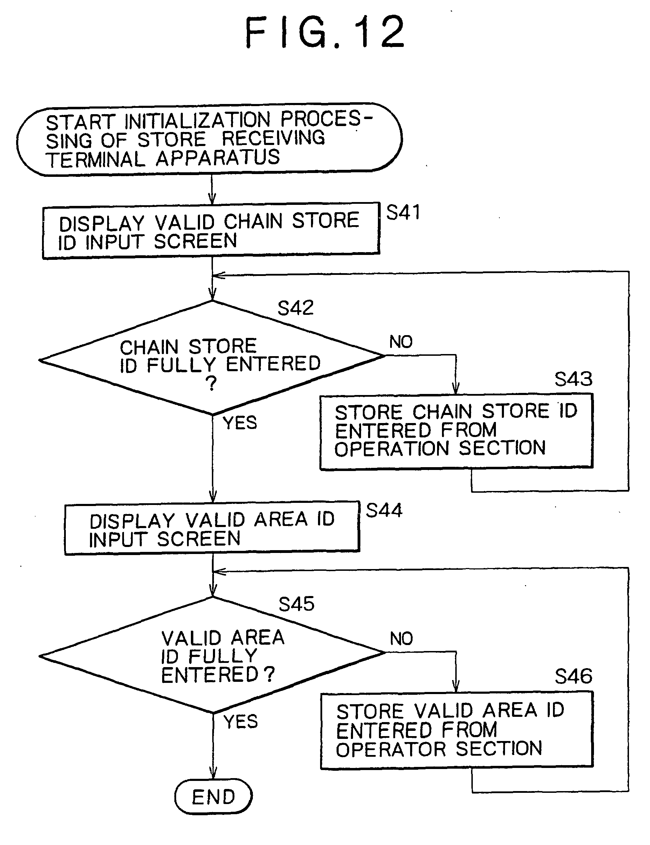

The following describes the processing of initializing the store receiving terminal apparatus 16 with reference to the flowchart of FIG. 12.

In step S41, the microcomputer 91 displays a chain store ID input screen on the display section 93. In step S42, the microcomputer 91 determines whether or not the chain store ID input processing has been completed. If the chain store ID input processing is found not completed, or if there still remains a chain store ID to be entered, then, in step S43, the microcomputer 91 stores the chain store ID entered by the user through the operation section 98 into the chain store ID 96a of the storage section 96, upon which the procedure returns to step S42.

If the chain store ID input processing is found completed in step S42, or there is no more chain store ID to be entered, then the process of step S43 is skipped, upon which the procedure goes to step S44. In step S44, the microcomputer 91 displays a valid area ID input screen on the display section 93.

In step S45, the microcomputer 91 determines whether or not the valid area ID input processing has been completed. If the valid area ID input processing is found not completed, or there still remains a valid area ID to be entered, then, in step S46, the microcomputer 91 stores the valid area ID entered by the user through the operation section 98 into the valid area ID 96b of the storage section 96, upon which the procedure returns to step S45.

In step S45, if the valid area ID input processing is found completed, or there is no more valid area ID to be entered, then the process of step S46 is skipped, upon which the procedure comes to an end.

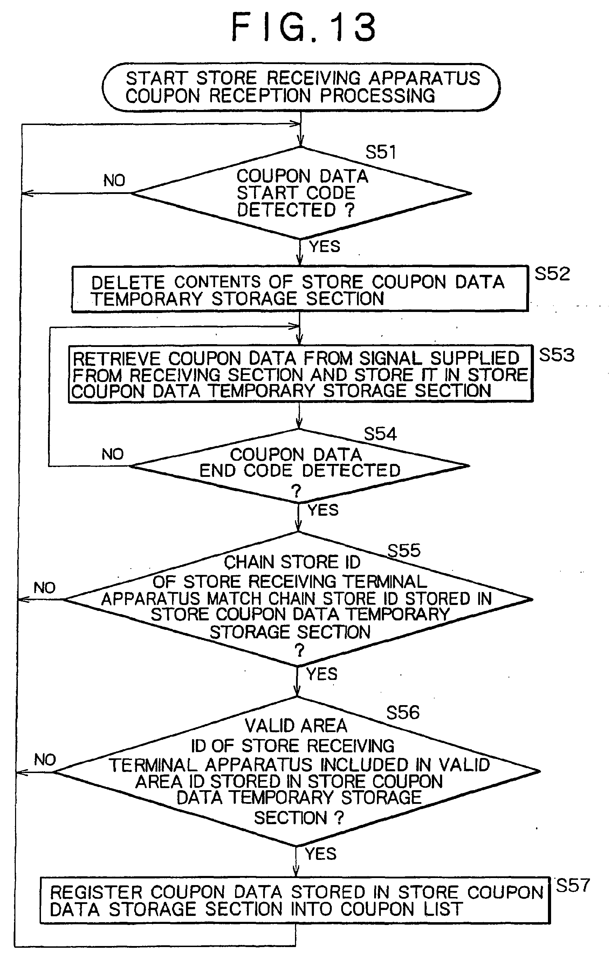

The following describes the processing for the store terminal apparatus 16 to receive coupon data to be distributed as multiplexed with a broadcast signal with reference to the flowchart of FIG. 13.

In step S51, the microcomputer 91 of the store terminal apparatus 16 controls the receiving section 92 to extract coupon data from the received broadcast signal and determines whether or not the start code of the extracted coupon data has been detected and repeats this operation until the start code is detected. If the start code is found detected, the procedure goes to step S52.

In step S52, the microcomputer 91 deletes all the contents of the store coupon data temporary storage section 94. In step S53, the microcomputer 91 stores the coupon data extracted from the receiving section 92 into the store coupon data temporary storage section 94.

In step S54, the microcomputer 91 determines whether or not the end code of the coupon data has been detected. If the end code is found not detected, the procedure returns to step S53. Namely, until the end code of the coupon data is detected, the microcomputer 91 repeats the detection of the end code of the coupon data, during which the coupon data are stored in the store coupon data temporary storage section 94. In step S54, if the end code of the coupon data is found detected, the procedure goes to step S55.

In step S55, the microcomputer 91 retrieves the chain store ID of the coupon data stored in the store coupon data temporary storage section 94 and compares the retrieved chain store ID with the chain store ID stored beforehand by the above-mentioned store receiving terminal processing in the storage section 96 as the chain store ID 96a, thereby determining whether or not the matching chain store ID is included in the chain store ID 96a. If the matching chain store ID is found included in the chain store ID 96a for example in step S55, the procedure goes to step S56.

In step S56, the microcomputer 91 retrieves the valid area ID of the coupon data stored in the store coupon data temporary storage section 94 and matches the retrieved valid area ID with the valid area ID stored beforehand by the above-mentioned store receiving terminal processing in the storage section 96 as the valid area ID 96b, thereby determining whether or not the matching valid area ID is included in the valid area ID 96b. If the valid area ID of the coupon data stored in the store coupon data temporary storage section 94 matching the valid area ID stored in the storage section 96 is found included in the valid area ID 96b stored beforehand in the storage section 96 in step S56, then the procedure goes to step S57.

In step S57, the microcomputer 91 registers the coupon data stored in the store coupon data storage section 94 into the coupon list 96c and stores the list into the storage section 96, upon which the procedure returns to step S51 to repeat the processing from this step.

If, in step S55, the chain store ID of the coupon data stored in the store coupon data temporary storage section 94 is found not included in the chain store ID matching the chain store ID 96a stored beforehand in the storage section 96, the procedure returns to step S51 to repeat the processing from this step. Namely, because the chain store ID of the received coupon data is found by the store receiving terminal processing not matching the previously stored chain store ID 96a, this coupon is regarded as unusable at that store and is not registered in the coupon list 96c.

If, in step S56, the valid area ID of the coupon data stored in the store coupon data temporary storage section 94 is fount not included in the valid area ID matching the valid area ID 96b stored beforehand in the storage area 96, the procedure returns to step S51 to repeat the processing from this step. Namely, because the valid area ID of the received coupon data is found by the store receiving terminal processing not matching the valid area ID 96b previously stored, this coupon cannot be used at the store in which the store terminal apparatus 16 is installed and is not registered in the coupon list 96c.

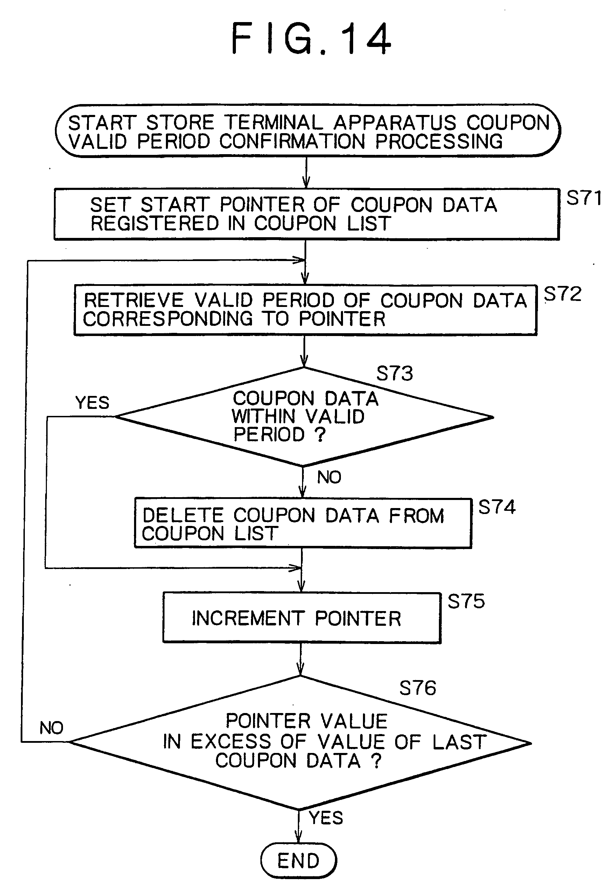

The following describes the processing of coupon valid period confirmation by the store terminal apparatus 16 with reference to the flowchart of FIG. 14. In step S71, the microcomputer 91 of the store terminal apparatus 16 sets the start pointer of the coupon data registered in the coupon list 96c stored in the storage section 96.

In step S72, the microcomputer 91 retrieves a valid period code included in the coupon data corresponding to the pointer. In step S73, the microcomputer 91 determines whether or not the coupon data are within a valid period, or compares the date of the calendar timer 95 with the valid period code included in the coupon data to determined whether or not the usable period of the coupon is valid. If the coupon data are found not valid for example, or the valid period of the coupon data is found expired, the procedure goes to step S74.

In step S74, the microcomputer 91 deletes the coupon data with its valid period expired from the coupon list 96c stored in the storage section 96c. In step S75, the microcomputer 91 increments the pointer value by one piece of coupon data.

In step S76, the microcomputer 91 determines whether or not the value of the pointer is in excess of the pointer value of the last coupon data. If the decision is yes, the procedure comes to an end.

If, in step S73, the usage period of the coupon is found valid, namely the date of the calendar timer 95 is found included in the valid period of the coupon data, the process of step S74 is skipped. Hence, the coupon data of which valid period has expired is deleted from the coupon list 96c, only the usable coupon data left in the coupon list 96c.

If, in step S76, the pointer value is found not in excess of the pointer value of the last coupon data, the procedure returns to step S72 to repeat the processing from this step.

It should be noted that the above-mentioned coupon data valid period confirmation processing is executed at certain time intervals. Executing the processing once every day always allows only the usable coupon data to be registered in the coupon list 96c.

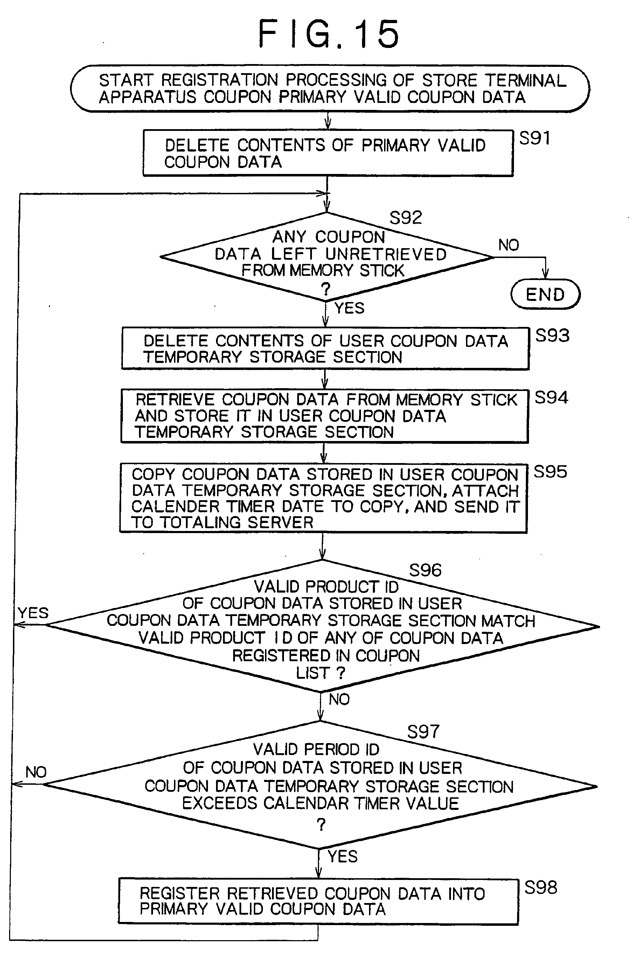

The following describes the processing for the store terminal apparatus 16 to register the primary valid coupon data when the memory stick 15 is loaded in the store terminal apparatus 16 with reference to the flowchart of FIG. 15. In step S91, the microcomputer 91 deletes the contents of the primary valid coupon data 96d.

In step S92, the microcomputer 91 determines whether or not there still remain coupon data not yet retrieved in the memory stick 15. For example, if the coupon data not yet retrieved are found in the memory stick 15, it is determined that there are the coupon data not yet retrieved, upon which the procedure goes to step S93.

In step S93, the microcomputer 91 deletes all the contents stored in the user coupon data temporary storage section 97. In step S94, the microcomputer 91 retrieves the coupon data from the loaded memory stick 15 and stores the coupon data into the user coupon data temporary storage section 97.

In step S95, the microcomputer 91 copies the user coupon data stored in the user coupon data temporary storage section 97, stamps the date of the calendar timer onto the copy, and controls the communication section 99 to send the copy to the totaling server 17 as the data for totaling.

In step S96, the microcomputer 91 determines whether or not the valid product ID of the coupon data stored in the user coupon data temporary storage section 97 matches the valid product ID of any coupon data registered in the coupon list 96c. If the valid product ID of the coupon data stored in the user coupon data temporary storage section 97 is found matching the valid product ID of any coupon data registered in the coupon list 96c, the procedure goes to step S97.

In step S97, the microcomputer 91 determines whether or not the valid period of the coupon data stored in the user coupon data temporary storage section 97 is in excess of the date indicated by the calendar timer 95. If the valid period of the coupon data stored in the user coupon data temporary storage section 97 is found not in excess of the date indicated by the calendar timer 95, the procedure goes to step S98.

In step S98, the microcomputer 91 registers the coupon data retrieved from the user coupon data temporary storage section 97 into the storage section 96 as the primary valid coupon data 96d, upon which the procedure returns to step S92 to repeat the processing from this step.

If, in step S92, no coupon data not yet retrieved from the memory stick 15 are found, the procedure comes to an end.

If, in step S96, the valid product ID of the coupon data stored in the user coupon data temporary storage section 97 is found not matching the valid product ID of any coupon data registered in the coupon list 96c, the procedure returns to step S92 to repeat the processing from this step.

If, in step S97, the valid period of the coupon data stored in the user coupon data temporary storage section 97 is found not in excess of the date indicated by the calendar timer 95, the procedure returns to step S92 to repeat the processing from this step.

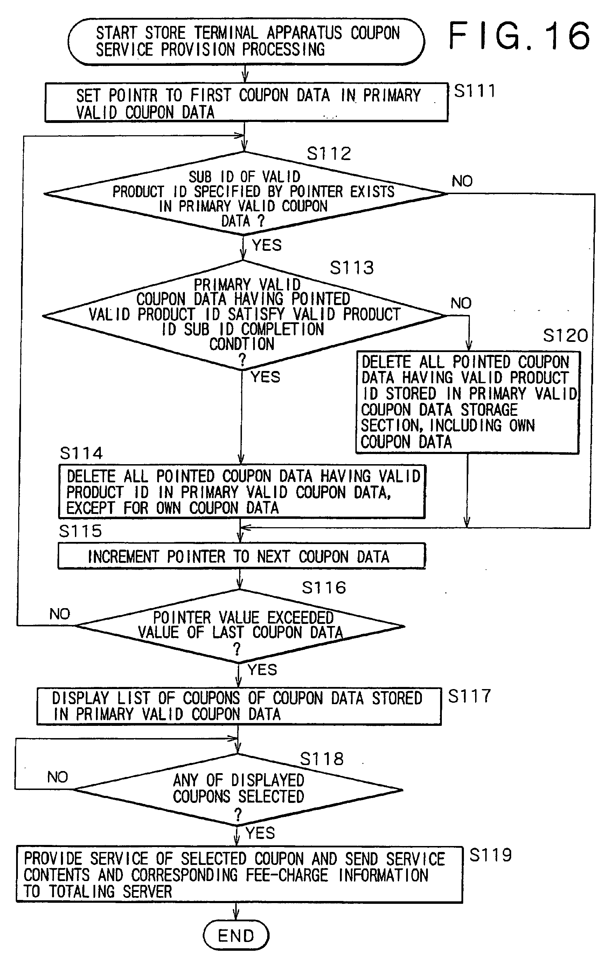

The following describes the processing of coupon service provision processing by the store terminal apparatus 16 with the flowchart of FIG. 16.

In step S111, the microcomputer 91 sets the value of the pointer to the first coupon data registered in the primary valid coupon data 96d. In step S112, the microcomputer 91 determines whether or not there is the sub ID of the valid product ID of the coupon data specified by the pointer in the primary valid coupon data 96d. If the sub ID is found, the procedure goes to step S113.

In step S113, the microcomputer 91 determines whether or not the completion condition of the sub ID of the valid product ID of the coupon data specified by the pointer in the primary valid coupon data 96d is satisfied. If the completion condition is found satisfied, the procedure goes to step S114.

In step S114, the microcomputer 91 deletes the coupon data other than those specified by the pointer of the coupon data having the valid product ID of the coupon data specified by the pointer of the coupon data registered in the primary valid coupon data 96d. In step S115, the microcomputer 91 increments the pointer value to the value corresponding to the next coupon data.

In step S116, the microcomputer 91 determines whether or not the pointer value is in excess of the value of the last coupon data. If the pointer value is found in excess of the value of the last coupon data, the procedure goes to step S117.

In step S117, the microcomputer 91 displays the coupon data stored in the primary valid coupon data onto the display section 93 as a list. In step S118, the microcomputer 91 determines whether or not any of the coupons displayed-on the display section 93 has been selected by the user through the operation section 98 and repeats the operation until the selection is made. If, in step S118, any of the coupons displayed on the display section 93 is found selected by the user through the operation section 98, then the procedure goes to step S119.

In step S119, the microcomputer 91 provides the service of the selected coupon, stores the fee-charge data corresponding to the contents of the service and the totaled data including the personal data of the user of the service into the storage section 96 as a log, and controls the communication section 99 to send these data to the totaling server 17 via the Internet 12.

Namely, when the user loads the memory stick 15 storing the coupon data received from the user receiving apparatus 14 owned by the user into the store terminal apparatus 16, the list of coupons for the services is displayed by the above-mentioned process of step S117 onto the display section 93 of the store terminal apparatus 16, thereby providing the services of the selected coupon and sending the fee-charge data and the totaled data to the totaling server 17.

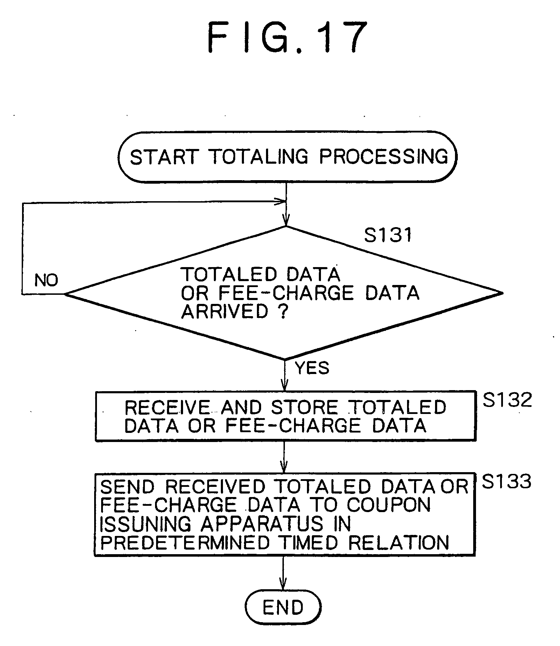

The following describes the totaling processing by the totaling server 17 with reference to the flowchart of FIG. 17. In step S131, the microcomputer 111 determines whether or not totaled data or fee-charge data have arrived at the communication section 115 via the Internet 12 and repeats this operation until the arrival. If, in step S131, the totaled data or the fee-charged data are found arrived, then the procedure goes to step S132.

In step S132, the microcomputer 111 controls the communication section 115 to receive the coupon data totaled data or fee-charge data from the store terminal apparatus 16 and stores the received data into the storage section 112 as fee-charge data 112a or totaled data 112b.

In step S133, the microcomputer 111 control the communication section 115 to send the fee-charge data 112a or the totaled data 112b to the coupon issuing apparatus 11 in a predetermined timed relation (at predetermined time intervals or every time when a transmission request comes from the coupon issuing apparatus 11).

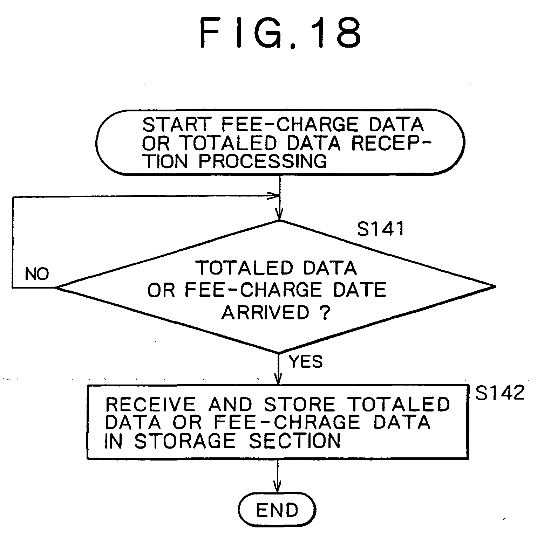

The following describes the processing for the coupon issuing apparatus 11 to receive fee-charge data or totaled data with reference to the flowchart of FIG. 18.

In step S141, the microcomputer 31 of the coupon issuing apparatus 11 controls the communication section 36 to determine whether or not totaled data or fee-charge data have arrived and repeats this operation until the arrival. If, in step S141, the totaled data or the fee-charge data are found arrived, then, in step S142, the microcomputer 31 controls the communication section 36 to store the received totaled data or fee-charge data into the storage section 36 as totaled data 36c or fee-charge data 36d.

The above-mentioned processing allows the business entity which distributes coupons to quickly check the coupon usage situation and, at the same time, automatically distribute fee-charge data.

In the description made above, an example is used in which the transfer of coupon data between the user receiving apparatus 14 and the store terminal apparatus 16 is executed via the memory stick 15. It will be apparent that any other recording media may be used as long as they are loadable on each of the user receiving apparatus 14 and the store terminal apparatus 16; for example, these recording media include a magnetic disc, an optical disc, a magneto-optical disc, and a semiconductor memory.

Alternatively, instead of using recording media for coupon data transfer, coupon data may be stored in a storage section incorporated in the user receiving apparatus 14 for transfer of the stored coupon data when store terminal apparatus 16 approaches the user receiving apparatus 14 by means of a short-distance communication device based on the Bluetooth standard for example.

In the description made above, the distribution apparatus 13 distributes coupon data along with radio program broadcast signals. It will be apparent that coupon data may be distributed by other means. For example, coupon data may be distributed through television broadcasting, CATV (Cable Television), mobile phone network, or the Internet.

In the description made above, the store terminal apparatus 15 sends to the totaling server 17 the personal data of users of coupons as totaled data. In this case, however, it is required to provide a mechanism for sending the personal data only when agreed by the user in order to prevent the personal information from being collected against user's intention, thereby protecting user's privacy.

Further, if the coupon data stored in the memory stick 15 recorded with the coupon data received from the user receiving apparatus 14 are found not included in the coupon list 96c stored in the storage section 96 of the store terminal apparatus 16 when the memory stick 15 is loaded in the store terminal apparatus 16, namely, the store terminal apparatus 16 has failed to receive the coupon data from the distribution apparatus 13 for some reasons, the microcomputer 91 may determine to perform processing in such a situation; for example, the microcomputer 91 may notify the business entity operating the store terminal apparatus 16 of the failure of reception or control the communication section 99 to receive the coupon data again from the distribution apparatus 13 via the Internet 12.

In the above-mentioned sequence of processes may be executed by hardware as well as by software. To execute the above-mentioned processing by software, the programs constituting the software are installed from recording media into a computer assembled in a dedicated hardware device or a general-purpose personal computer which can execute various capabilities by installing various programs.

The recording media are constituted by not only the storage section 112 recorded with programs provided to the user as built in the totaling server 17 as shown in FIG. 6, but also package media such as the magnetic disk 211 (including a floppy disk), the optical disk 212 (including CD-ROM (Compact Disk-Read Only Memory) and a DVD (Digital Versatile Disk)), and the magneto-optical disk 213 (including MD (Mini Disk), and the semiconductor memory 214 (including Memory Stick) which are distributed to users to provide programs independently of computers.

It should be noted that the steps for describing programs to be recorded in recording media include not only the processing operations which are executed in a time dependent manner in the order described, but also the processing operations which are executed in parallel to each other or discretely from each other.

It should also be noted that term system as used herein denotes an entire apparatus constituted by two or more components.

### Industrial Applicability

As described and according to the invention, the provision of services by coupons and the fee-charging for the provided services may be electronically processed. In addition, the invention is intended not only to quickly execute the provision of services, the processing of fee-charging, and the processing of totaling of data but also to quickly indicate the usage status of coupons.

## Claims

1. An information processing apparatus comprising:
storage means for storing an electronic coupon; and
distribution means for distributing said electronic coupon stored in said storage means;
wherein said electronic coupon includes at least two of a valid chain store ID, a valid area ID, a valid product ID, and valid period.

2. The information processing apparatus according to claim 1, wherein said valid product ID includes a sub ID.

3. The information processing apparatus according to claim 1, wherein said distribution means distributes said same electronic coupon to an apparatus of a user who uses said electronic coupon and an apparatus of a provider who provides services based on said electronic coupon.

4. An information processing method comprising:
a storage step for storing an electronic coupon; and
a distribution step for distributing said electronic coupon stored by said storage step;
wherein said electronic coupon includes at least two of a valid chain store ID, a valid area ID, a valid product ID, and valid period.

5. A recording medium recorded with a computer-readable program comprising:
a storage control step for controlling storage of an electronic coupon; and
a distribution control step for controlling distribution of said electronic coupon stored by said storage control step;
wherein said electronic coupon includes at least two of a valid chain store ID, a valid area ID, a valid product ID, and valid period.

6. An information processing apparatus comprising:
selection means for selecting a predetermined electronic coupon from a plurality of distributed electronic coupons;
reception means for receiving said predetermined electronic coupon selected by said selection means;
storage means for storing said electronic coupon received by said reception means; and
electronic coupon transmission means for transmitting said electronic coupon stored in said storage means to another information processing apparatus.

7. The information processing apparatus according to claim 6, wherein said electronic coupon includes at least two of a valid chain store ID, a valid area ID, a valid product ID, and a valid period.

8. The information processing apparatus according to claim 7, wherein said valid product ID includes a sub ID.

9. The information processing apparatus according to claim 6, wherein said electronic coupon is the same as said electronic coupon which is distributed to an apparatus of a provider who provides services based on said electronic coupon.

10. An information processing method comprising:
a selection step for selecting a predetermined electronic coupon from a plurality of distributed electronic coupons;
a reception step for receiving said predetermined electronic coupon selected in said selection step;
a storage step for storing said electronic coupon received in said reception step; and
an electronic coupon transmission step for transmitting said electronic coupon stored in said storage step to another information processing apparatus.

11. A recording medium recorded with a computer-readable program comprising:
a selection control step for controlling selection of a predetermined electronic coupon from a plurality of distributed electronic coupons;
a reception control step for controlling reception of said predetermined electronic coupon selected in said selection control step;
a storage control step for controlling storage of said electronic coupon received in said reception control step; and
an electronic coupon transmission control step for controlling transmission of said electronic coupon stored in said storage control step to another information processing apparatus.

12. An information processing apparatus comprising:
reception means for receiving a plurality of distributed electronic coupons;
storage means for storing said plurality of electronic coupons received by said reception means;
acceptance means for accepting an electronic coupon from another information processing apparatus which received said electronic coupon;
retrieval means for retrieving the electronic coupon accepted by said acceptance means from said plurality of electronic coupons stored in said storage means; and
service provision means for providing services corresponding to the electronic coupon accepted by said acceptance means in response to a result of the retrieval made by said retrieval means.

13. The information processing apparatus according to claim 12, wherein said electronic coupon includes at least two of an valid chain store ID, a valid area ID, a valid product ID, and a valid period.

14. The information processing apparatus according to claim 13, further comprising registration means for registering a plurality of said valid chain store IDs;
wherein said storage means stores said electronic coupon corresponding to said valid chain store ID registered by said registration means.

15. The information processing apparatus according to claim 14, further comprising, if said retrieval means fails to retrieve said electronic coupon corresponding to said electronic coupon accepted by said acceptance means, notification means for notifying a provider of services based on said electronic coupon of the failure of retrieval.

16. The information processing apparatus according to claim 13, wherein said valid product ID includes a sub ID.

17. The information processing apparatus according to claim 13, further comprising valid period confirmation means for confirming if said electronic coupon is usable on the basis of said valid period.

18. The information processing apparatus according to claim 13, further comprising valid area confirmation means for confirming if said electronic coupon is usable on the basis of said valid area ID.

19. The information processing apparatus according to claim 12, wherein said electronic coupon is the same as said electronic coupon to be distributed to said another processing apparatus.

20. The information processing apparatus according to claim 12, further comprising:
recording means for recording a log of said electronic coupon accepted by said acceptance means; and
transmission means for transmitting said log recorded in said recording means to a totaling apparatus.

21. The information processing apparatus according to claim 20, further comprising fee-charge data transmission means for transmitting fee-charge data for services provided on the basis of said electronic coupon to said totaling apparatus.

22. An information processing method comprising:
a reception step for receiving a plurality of distributed electronic coupons;
a storage step for storing said plurality of electronic coupons received in said reception step;
an acceptance step for accepting an electronic coupon from another information processing apparatus which received said electronic coupon;
a retrieval step for retrieving the electronic coupon accepted in said acceptance step from said plurality of electronic coupons stored in said storage step; and
a service provision step for providing services corresponding to the electronic coupon accepted in said acceptance step in response to a result of the retrieval made in said retrieval step.

23. A recording medium recorded with a computer-readable program comprising:
a reception control step for controlling reception of a plurality of distributed electronic coupons;
a storage control step for controlling storage of said plurality of electronic coupons received in said reception control step;
an acceptance control step for controlling acceptance of an electronic coupon from another information processing apparatus which received said electronic coupon;
a retrieval control step for controlling retrieval of the electronic coupon accepted in said acceptance control step from said plurality of electronic coupons stored in said storage control step; and
a service provision control step for controlling provision of services corresponding to the electronic coupon accepted in said acceptance control step in response to a result of the retrieval made in said retrieval control step.

24. An information processing system comprising a first information processing apparatus for distributing an electronic coupon, a second information processing apparatus for selectively receiving and storing said distributed electronic coupon, and a third information processing apparatus for receiving and storing all distributed coupons,
said first information processing apparatus comprising:
first storage means for storing said electronic coupon; and
distribution means for distributing said electronic coupon stored in said first storage means;
said second information processing apparatus comprising:
selection means for selecting a predetermined electronic coupon from a plurality of distributed electronic coupons;
first reception means for receiving said predetermined electronic coupon selected by said selection means;
second storage means for storing said electronic coupon received by said first reception means; and
electronic coupon transmission means for transmitting said electronic coupon stored in said second storage means to said third information processing apparatus; and
said third information processing apparatus comprising:
second reception means for receiving a plurality of distributed electronic coupons;
third storage means for storing said plurality of electronic coupons received by said second reception means;
acceptance means for accepting an electronic coupon from said coupon transmission means;
retrieval means for retrieving the electronic coupon accepted by said acceptance means from said plurality of electronic coupons stored in said third storage means; and
service provision means for providing services corresponding to the electronic coupon accepted by said acceptance means in response to a result of the retrieval made by said retrieval means.

25. An information processing method for an information processing system comprising a first information processing apparatus for distributing an electronic coupon, a second information processing apparatus for selectively receiving and storing said distributed electronic coupon, and a third information processing apparatus for receiving and storing all distributed coupons,
the information processing method for said first information processing apparatus comprising:
a first storage step for storing said electronic coupon; and
a distribution step for distributing said electronic coupon stored in said first storage step;
the information processing method for said second information processing apparatus comprising:
a selection step for selecting a predetermined electronic coupon from a plurality of distributed electronic coupons;
a first reception step for receiving said predetermined electronic coupon selected in said selection step;
a second storage step for storing said electronic coupon received in said first reception step; and
an electronic coupon transmission step for transmitting said electronic coupon stored in said second storage step to said third information processing apparatus; and
the information processing method for said third information processing apparatus comprising:
a second reception step for receiving all of a plurality of distributed electronic coupons;
a third storage step for storing said plurality of electronic coupons received in said second reception step;
an acceptance step for accepting an electronic coupon from said coupon transmission step;
a retrieval step for retrieving the electronic coupon accepted in said acceptance step from said plurality of electronic coupons stored in said third storage step; and
a service provision step for providing services corresponding to the electronic coupon accepted in said acceptance step in response to a result of the retrieval made in said retrieval step.

26. A recording medium recorded with a computer-readable program for controlling an information processing system comprising a first information processing apparatus for distributing an electronic coupon, a second information processing apparatus for selectively receiving and storing said distributed electronic coupon, and a third information processing apparatus for receiving and storing all distributed coupons,
said program stored in the recording medium of said first information processing apparatus comprising:
a first storage control step for controlling storage of said electronic coupon; and
a distribution control step for controlling distribution of said electronic coupon stored in said first storage control step;
said program stored in the recording medium of said second information processing apparatus comprising:
a selection control step for controlling selection of a predetermined electronic coupon from a plurality of distributed electronic coupons;
a first reception control step for controlling reception of said predetermined electronic coupon selected in said selection control step;
a second storage control step for controlling storage of said electronic coupon received in said first reception control step; and
an electronic coupon transmission control step for controlling transmission of said electronic coupon stored in said second storage control step to said third information processing apparatus; and
said program stored in the recording medium for said third information processing apparatus comprising:
a second reception control step for controlling reception of a plurality of distributed electronic coupons;
a third storage control step for controlling storage of said plurality of electronic coupons received in said second reception control step;
an acceptance control step for controlling acceptance of an electronic coupon from said coupon transmission control step;
a retrieval step for controlling retrieval of the electronic coupon accepted in said acceptance control step from said plurality of electronic coupons stored in said third storage control step; and
a service provision control step for controlling provision of services corresponding to the electronic coupon accepted in said acceptance control step in response to a result of the retrieval made in said retrieval control step.

## Amended claims

### Amended claims under Art. 19.1 PCT

**1.** (As amended) An information processing apparatus comprising:
storage means for storing an electronic coupon; and
distribution means for distributing said electronic coupon stored in said storage means;
wherein said electronic coupon includes information of a valid chain store ID, a valid area ID, a valid product ID, and a valid period.

**2.** The information processing apparatus according to claim 1, wherein said valid product ID includes a sub ID.

**3.** The information processing apparatus according to claim 1, wherein said distribution means distributes said same electronic coupon to an apparatus of a user who uses said electronic coupon and an apparatus of a provider who provides services based on said electronic coupon.

**4.** (As amended) An information processing method comprising:
a storage step for storing an electronic coupon; and
a distribution step for distributing said electronic coupon stored in said storage step;
wherein said electronic coupon includes information of a valid chain store ID, a valid area ID, a valid product ID, and a valid period.

**5.** (As amended) A recording medium recorded with a computer-readable program comprising:
a storage control step for controlling storage of an electronic coupon; and
a distribution control step for controlling distribution of said electronic coupon stored in said storage control step;
wherein said electronic coupon includes information of a valid chain store ID, a valid area ID, a valid product ID, and a valid period.

**6.** An information processing apparatus comprising:
selection means for selecting a predetermined electronic coupon from a plurality of distributed electronic coupons;
reception means for receiving said predetermined electronic coupon selected by said selection means;
storage means for storing said electronic coupon received by said reception means; and
electronic coupon transmission means for transmitting said electronic coupon stored in said storage means to another information processing apparatus.

**7.** (As amended) The information processing apparatus according to claim 6, wherein said electronic coupon includes information of a valid chain store ID, a valid area ID, a valid product ID, and a valid period.

**8.** The information processing apparatus according to claim 7, wherein said valid product ID includes a sub ID.

**9.** The information processing apparatus according to claim 6, wherein said electronic coupon is the same as said electronic coupon which is distributed to an apparatus of a provider who provides services based on said electronic coupon.

**10.** An information processing method comprising:
a selection step for selecting a predetermined electronic coupon from a plurality of distributed electronic coupons;
a reception step for receiving said predetermined electronic coupon selected in said selection step;
a storage step for storing said electronic coupon received in said reception step; and
an electronic coupon transmission step for transmitting said electronic coupon stored in said storage step to another information processing apparatus.

**11.** A recording medium recorded with a computer-readable program comprising:
a selection control step for controlling selection of a predetermined electronic coupon from a plurality of distributed electronic coupons;
a reception control step for controlling reception of said predetermined electronic coupon selected in said selection control step;
a storage control step for controlling storage of said electronic coupon received in said reception control step; and
an electronic coupon transmission control step for controlling transmission of said electronic coupon stored in said storage control step to another information processing apparatus.

**12.** An information processing apparatus comprising:
reception means for receiving a plurality of distributed electronic coupons;
storage means for storing said plurality of electronic coupons received by said reception means;
acceptance means for accepting an electronic coupon from another information processing apparatus which received said electronic coupon;
retrieval means for retrieving the electronic coupon accepted by said acceptance means from said plurality of electronic coupons stored in said storage means; and
service provision means for providing services corresponding to the electronic coupon accepted by said acceptance means in response to a result of the retrieval made by said retrieval means.

**13.** (As amended) The information processing apparatus according to claim 12, wherein said electronic coupon includes information of a valid chain store ID, a valid area ID, a valid product ID, and a valid period.

**14.** The information processing apparatus according to claim 13, further comprising registration means for registering a plurality of said valid chain store IDs;
wherein said storage means stores said electronic coupon corresponding to said valid chain store ID registered by said registration means.

**15.** The information processing apparatus according to claim 14, further comprising, if said retrieval means fails to retrieve said electronic coupon corresponding to said electronic coupon accepted by said acceptance means, notification means for notifying a provider of services based on said electronic coupon of the failure of retrieval.

Statement under Art. 19.1 PCT
Claims 1, 4, 5, 7, and 13 clarify that each electronic coupon includes information of a valid chain store ID, a valid area ID, a valid product ID, and a valid period.

According to the present invention, the provision of services based on coupons and the fee-charging for the provided services can be processed electronically, thereby enhancing the speeds of not only service provision, fee-charge processing, and totaling processing but also indication of coupon usage status.
